# EUROPEAN PATENT SPECIFICATION

(11) **EP 0 930 950 B1**
(45) Date of publication and mention of the grant of the patent: **11.06.2003**
(21) Application number: 96945780.3
(22) Date of filing: 10.10.1996
(51) Int. Cl.: B23K 9/028

(54) **METHOD OF WELDING PIPE**
VERFAHREN ZUM ROHRSCHWEISSEN
PROCEDE DE SOUDURE DE TUYAUX

(43) Date of publication of application: 28.07.1999
(73) Proprietor: THE LINCOLN ELECTRIC COMPANY, Cleveland, Ohio 44117 (US)
(72) Inventor: PARKER, William, D., Tulsa, OK 74114 (US)
(74) Representative: Hennicke, Ernst Rüdiger, Dipl.-Ing.
(86) International application number: US9617513
(87) International publication number: WO98015378

(56) References cited:
- EP-A- 0 441 337
- EP-A- 0 566 212
- EP-A- 0 605 879
- DE-A- 2 741 622
- US-A- 3 806 694
- US-A- 3 922 517
- US-A- 5 227 601
- WELDING AND METAL FABRICATION, vol. 64, no. 2, February 1996, REDHILL, SURREY GB, pages 67-68, XP000555664 "Understanding Inverters."

## Description

### Background of the Invention

### 1. Field of the Invention

This invention relates to the field of welding sections of pipe together to form a long, continuous pipeline. It relates especially to a system whereby the welding is done with machines.

### 2. Background of the Invention

One of the major systems for transporting products such as oil, gas, and water, is by the use of pipelines. These pipelines are usually laid underground and literally crisscross the United States and many other countries. A trench is normally dug by ditch diggers along the prescribed route of the pipeline.

Sections of pipe, e.g. 30 to 60 feet (9,14 to 18,28 meters) or so, are hauled into the area through which the pipeline is being laid. Ends of adjacent joints of pipe are connected by welding. These welds must be very precise. Even little pinholes in the weld cannot be tolerated. The ends of the pipe are normally beveled to improve the welding. These pipes are clamped together to get as good an alignment between the two sections of pipe as possible. On the inside of the pipe at the welding joints the welding material should form a rather smooth surface next to the interior of the pipe. In any event, the weld on the inside of the pipe should have very little protrusion. Excessive protrusion can cause all sorts of problems when one runs apparatuses down inside the pipe, such as apparatus useful to detect any possible flaw which may have developed in the pipeline. Also, introduced in the pipelines are pipeline pigs which separate one product present in a pipeline from a second. It should be understood that sometimes gasoline will be piped through a pipeline. A plug will be put in to separate the two products, and then crude oil will then be pumped through the same pipe. One must maintain a consistent separation of the two materials.

In order to prevent the protrusion of welded molten welding material into the inside of a pipe, the more common practice today is to make the first or root pass of the weld from inside the pipe. Special elaborate, costly machines are commercially available for this purpose. The cost of renting such elaborate equipment for working on the inside of a three foot (3') diameter pipe may be as much as $1,200.00 per weld, or the rental could be nearly Two Million Dollars per month. This is a very time-consuming and costly welding procedure. It is seen that there is a need for a better, less expensive way of welding pipe sections together.

In modern pipeline welding, welding bugs are sometimes used as semi-automatic welding machines. In conjunction with the welding bug is a track which is secured about the periphery of the pipe at the point it is desired for the welding bug to rotate around the pipe. The bug has a drive motor which with the help of rollers, drives the bug around the track. The rollers hold the welding bug along the track, even when the welding bug is nearly upside down. Special damping means are provided to secure the bug to the track. Means are also provided to accommodate different size pipe. The welding bug has an oscillator to cause the welding tip to oscillate across the welding puddle.

The bug also has a wire feeder which has a motor which drives the wire through the welding head for the actual welding of the two sections of pipe together.

In operation, the drive motor drives the bug around the track at a selected constant rate of speed. However, when the bug is traveling from 12 o'clock, which is the top of the pipe, to about 9 o'clock, which is midway around, the speed is constant. However, for the balance of the down movement of the welding bug to 6 o'clock, the movement must be speeded up because of the gravity pulling the puddle at a faster rate. In order to accommodate this, in current practice, the bug drive motor is stopped. Then the operator will adjust the speed of the drive motor so that it will be speeded up. He then starts the drive motor, and the welding process continues. The movement of the bug is always stopped when making this change in speed.

Stopping the drive motor causes a loss of time in completing the weld. Other associated problems such as maintaining the continuity of the bead must be considered. However, even with these problems, the procedure just discussed is widely used, mainly because it is better than the prior procedures.

Document US-A-3 806 694 discloses an apparatus for welding one end of a first pipe to one end of a second pipe, said apparatus comprising:
a welding tractor;
a power generator;
a welding bug including a wire feeder and a welding head for feeding an advancing welding wire as an electrode and means to guide said bug around the periphery of said pipe;
e. speed control means for varying the speed of said welding bug as it moves about its track around the periphery of said first and/or second pipe.

It is therefore one object of this invention to provide an apparatus and system whereby the initial or root welding pass can be made from outside the pipe and in which there is no internal protrusion of the welding puddle.

### Summary of the Invention

This is a method and an apparatus of welding the end of a first pipe section to the end of a second pipe second by use of an improved welding bug. The welding bug is provided with a wire feeder, means to drive the wire feeder, and driving means for driving the bug around a track on the outside of a periphery of pipe. Control means are provided for varying the speed of the bug while the bug is continuously driven around the track. When the pipe is welded, it is in a horizontal position, that is, the axis of the pipe is normally horizontal. The initial welding pass or root pass is applied adjacent to the ends of the first and second pipe from outside the first and second pipe. No internal line-up clamps with back-up shoes are used or needed in this process.

Normally two bugs are used, one around one-half of the track and the other around approximately the other half. From 12 o'clock to 9 o'clock one bug goes from nearly horizontal to nearly vertical. During this time the speed of the bug must be varied so as to keep the electrode with the welding wire just ahead of the welding puddle. The other bug moves from 12 o'clock, through 3 o'clock, to 6 o'clock. The two bugs are rotating or moving at the same time. However, one bug will start slightly before the other and one will stop slightly before the other and be removed from that immediate area so there is a continuous weld where the welding passes from the two bugs meet. In the root pass a surface tension transfer (STT) power source is used. This is new in this combination. By using this system with proper bug speed and welding wire speed, there is only a slight burn through on each edge of the bevel. The surface tension of the welding mode causes it to blend together, tying in each side of the bevel leaving a small flat weld on the interior of the pipe. Thus, the need to run the initial or root pass from the inside of the pipe, or use equipment inside the pipe is no longer necessary. Before this invention when welding pipe together with systems involving welding bugs, the root or initial pass was always from the inside or involved placing equipment such as clamps, back-up shoes, etc. inside the pipe. No such equipment is needed with this invention.

Means are also provided for varying the speed of the wire feeder so that there is the desired amount of wire being fed into the welding puddle. In another embodiment the speed of the wire feeder drive is controlled by and varies in accordance with varying the speed of the drive motor for the bug such that the desired rate of feeding the wire is achieved.

In operation, the welding operator will continuously observe the welding puddle in relation to the electrode or the end of the welding wire being fed. The operator will want to keep the end of the welding wire just ahead of the puddle. Therefore, the operator will vary the speed of the bug to maintain the proper position of the welding head. This is done while the bug and welding operation proceeds with no stops required. During the actual movement of the welding bug, the wire feed drives can be varied to get the desired amount of welding wire to the electrode. Further, if desired, a control can be made such that the wire feeder speed will vary in accordance with the speed of the welding bug.

### Brief Description of the Drawings

FIG. 1 is a schematic drawing illustrating key components of the invention.
FIG. 2 illustrates a welding bug mounted on a track showing a piece of pipe which is to be welded to another piece.
FIG. 3 is a front elevation of the welding bug of FIG. 2.
FIG. 4 is a rear elevation of the welding bug of FIG. 3.
FIG. 5 is a left-side evaluation of portions of the welding bug of FIG. 4.
FIG. 6 illustrates clamping means for releasably clamping the guide rollers and travel drive rollers of the bug to the guide track.
FIG. 7 is similar to FIG. 6 except that the clamp is illustrated in the disengaged position.
FIGS. 8 and 9 when taken together shows the wobble of the welding head.
FIG. 10 illustrates the bottom view of the welding bug.
FIG. 11 illustrates the connection between a potentiometer for driving the wire feeder and the potentiometer for the travel motor such that the drive wire feeder is adjusted in accordance with the change of the travel speed of the welding bug.
FIG. 12 is a schematic of a system for controlling the speed of the travel motor on the welding bug.
FIG. 13 illustrates pulses in the control system of FIG. 12.

### Description of the Preferred Embodiment

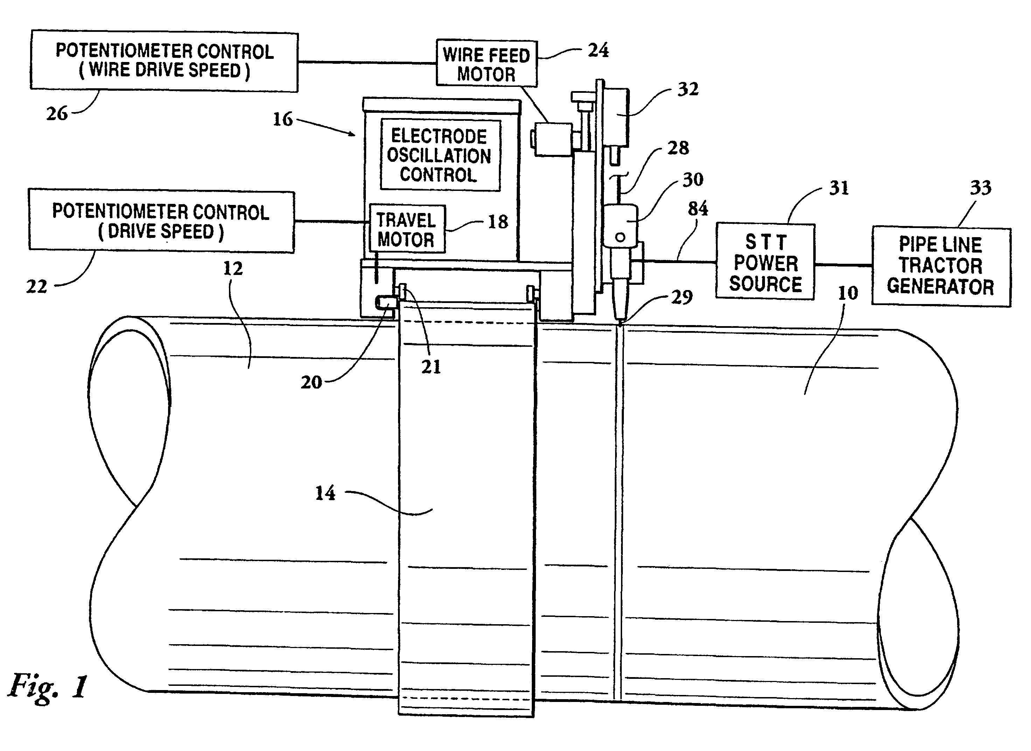

Attention is first directed to FIG. 1 which is a schematic drawing showing the key components of a welding system using a modified welding bug. Shown thereon is a first pipe joint **10** and second pipe joint **12** which are to be welded together. A guide track **14** is positioned and secured to the outside of the welding pipe near the position where the pipe ends are to be welded. It is upon this guide track that the welding bug **16** travels. There will normally be two welding bugs, but only one is shown. Position or guide bearings or rollers **20** maintain the welding bug on track **14** as the bug travels thereon. There is a travel motor **18** in the welding bug which drives knurled travel rollers **21** about the track **14**. The speed of the travel motor is controlled by a potentiometer control **22**.

A welding head **30** is supported from the welding bug **16** and supports a welding wire **28** which extends through the welding head **30** as the electrode **29**. A track **14** is positioned on pipe **12** so that the end of welding wire **28** is properly positioned with respect to the ends of the pipes **10** and **12.** A CO₂ solenoid valve **32** is supported from the welding bug **16** and provides CO₂ or other desired gas to be expelled at the lower end of the welding head **30** about the end of the welding wire tip **29**.

In operation of the device in FIG. 1, the CO₂ solenoid is first opened so that all other gas is flushed out from around the electrode **29** before it is supplied with electrical power. The power for welding head **30** is provided via conduit 84 from surface-tension-transfer power source **31** which will be explained further as a new type power source for the automatic welding system using a welding bug. This STT power source is now started.

Next the wire feed motor **24** and the welding bug travel motor **18** are simultaneously started. This causes the welding bug **16** to start moving along track **14**. The operator watches the operation, especially the welding puddle. The speed of the welding bug should be such that the wire tip **29** should just maintain itself in advance of the puddle. As the welding bug goes around the pipe, the gravity varies the movement of the puddle. The operator will compensate for this by operating potentiometer control to change the drive speed **22** speed while the welding is in progress. If the wire feed motor is not feeding the wire sufficiently fast, then potentiometer control **26** for wire drive speed can be increased or, if the situation demands, it can be decreased. This too is done while the welding bug **16** is moving along track **14**. (Never before has the speed of the welding bug along the track been varied while the welding is actually taking place.)

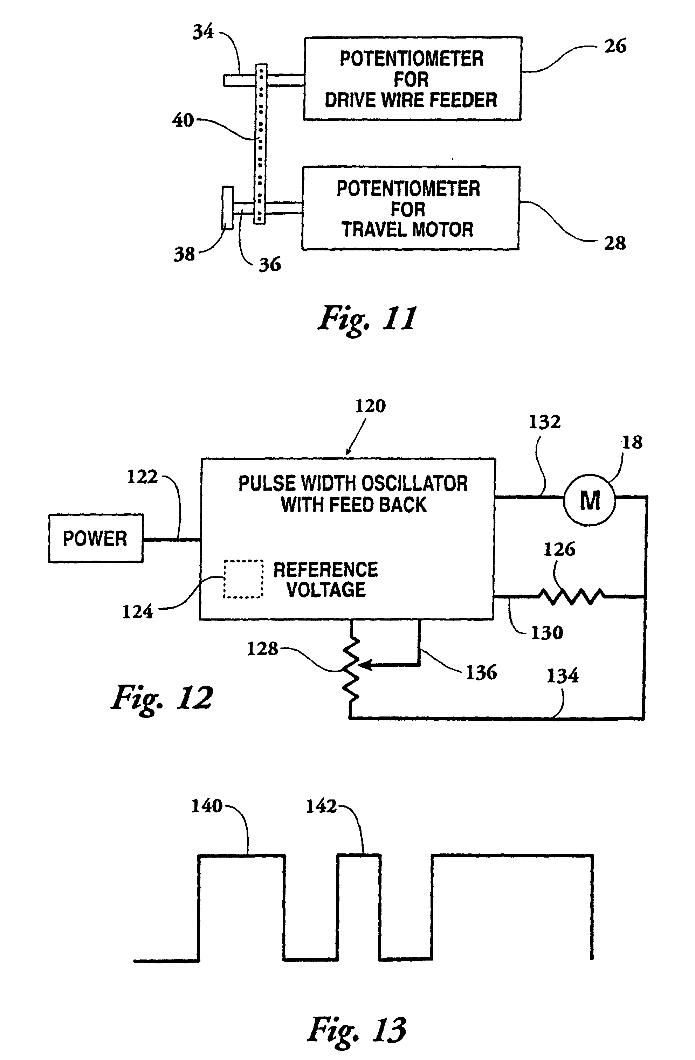

Instead of controlling the drive speed of the travel motor **18** independently from the speed of wire feed motor **24**, one may make the wire feed motor speed a function of the speed of the travel motor. This apparatus for permitting this is illustrated in FIG. 11. In this apparatus the operator of the welding bug would turn knob **38** to adjust the travel speed of the welding bug. This change would be in the general manner of changing potentiometer settings for controlling the speed of a motor. In this case, there is a drive chain or belt **40** connected between the shafts or rotor **34** of potentiometer for drive wire feeder **26** and the rotor **36** for potentiometer for travel motor **28**. Thus when wheel **38** is rotated, the drive chain **40** will drive the rotor **34** to adjust the potentiometer for drive wire feeder **26**. Thus, as the speed of the welding bug varies, the speed of the drive wire feeder can vary accordingly.

A pipeline tractor **42** has a generator which provides electrical power to the surface-tension-transfer (STT) power source **32**. In principle, the STT power source is a power source which has the capability of delivering and changing electrode current in the order of microseconds, for example about 750 microseconds has been effective. The STT power source is commercially available from the Lincoln Electric Company, Cleveland, Ohio 44117-1199, U.S.A (See also EP-A-441 337).

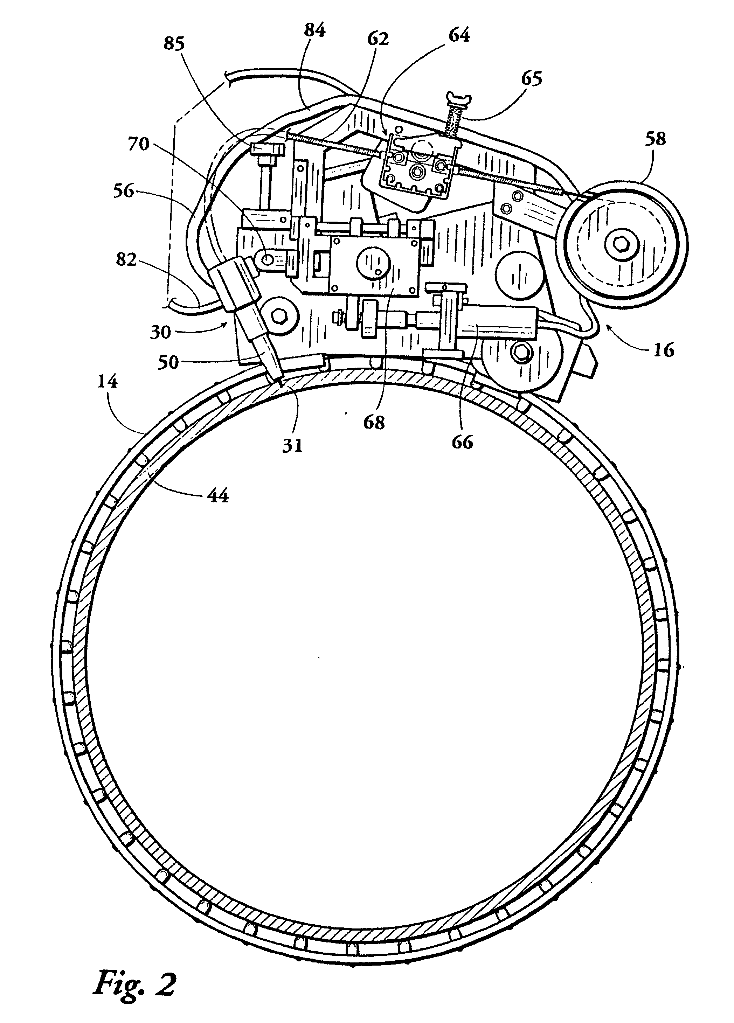

Attention is next directed to FIG. 2 which shows a modified welding bug **16** mounted upon track **14** which encircles the pipe **44**. Track **14** may be a conventional track which guides a welding bug around pipe. The principal components of welding bug **16** include a welding tip or electrode **31** at welding head **30** having a gas cone **50** which directs welding gas, typically CO₂, about the electrode **31**. Conduit **84** connects STT power source **31** to welding head **30**. The welding wire, which is an electrode, is wound on wire reel **58**, passes through shield **60** and **62**, with a wire feeder **64** between the two shields. The wire feeder is conventional and has tension adjustment **65**. This wire feeder **64** is used to drive a wire at a selected speed through the welding head **30**. CO₂ supply hose **82** connects the welding head **30** in a conventional manner. An oscillating motor **66** is provided to drive oscillating mechanism **68** which is connected through connector **70** to oscillate the welding head **30** so that the electrode is moved back and forth across the opening between the ends of the pipe being welded. Connector **70** can be used to adjust the positioning of welding head **30**. Knob **85** is used for adjusting the height of the welding head.

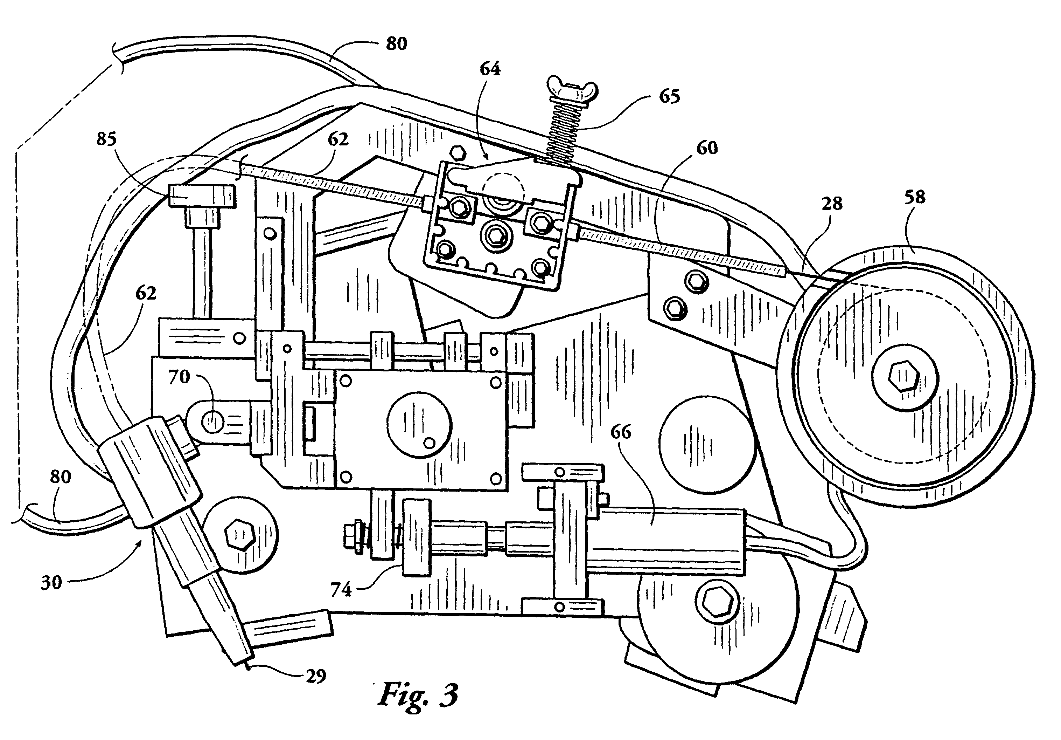

Attention is now best directed to FIG. 3 which shows the welding bug **16** in enlarged form. It shows an oscillator adjusting mechanism **74** to adjust the height of the oscillation curve, i.e. the width of oscillation. (This oscillating system may be the same as shown as used on conventional welding bugs.)

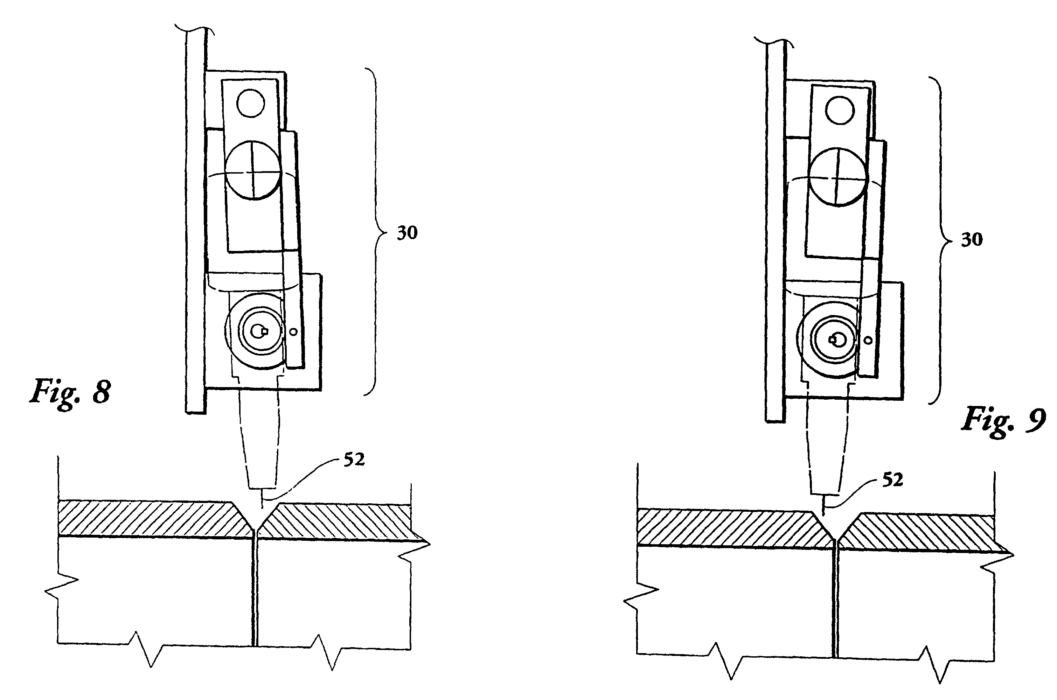

Attention is next directed to FIG. 8 which shows oscillator tip in one position and in FIG. 9 wherein the welding tip is in a second position. The welding tip **52** is supported by welding head **30**. This oscillating system is used in the conventional welding bugs and is shown here only for ease of understanding the overall system.

FIG. 3 also shows an adjustment knob **85** for adjusting the height of the welding head with respect to the welding bug and in effect the height in relation to the pipe being welded.

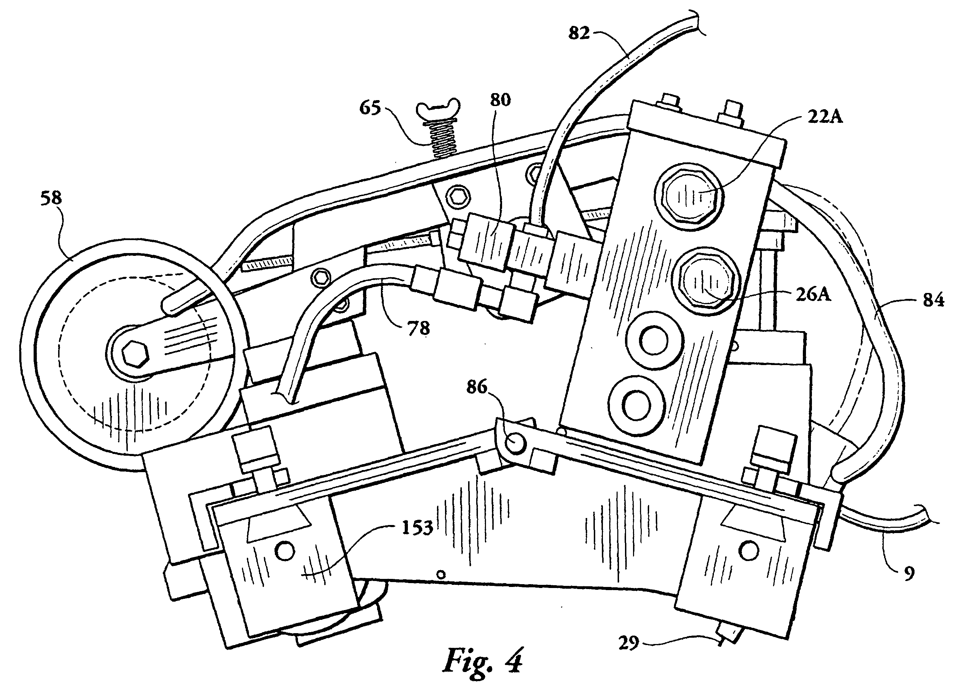

It is essential to provide an inert gas which is preferably carbon dioxide to the welding head. This is provided as shown in FIG. 4 from a gas source hose **78** which is connected to a solenoid valve **80** which has an outlet hose **82** which goes to the welding head. Gas is provided through the solenoid when it is opened. A power conduit **84** from the STT power source **32** provides the operating current for welding head **30.**

A variable swivel adjustment **86** provides means for adjusting the angle of the welding head as may be needed.

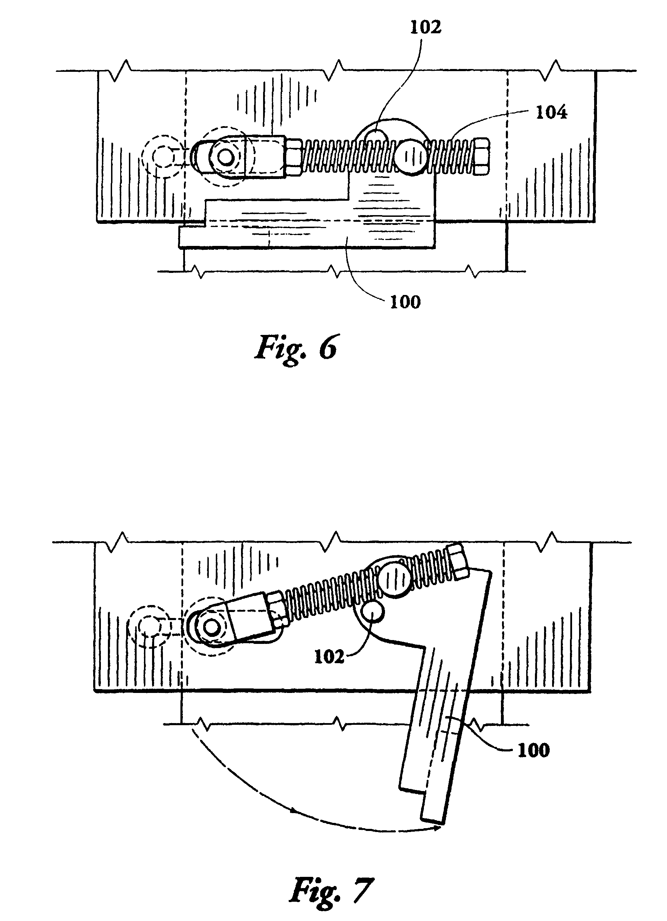

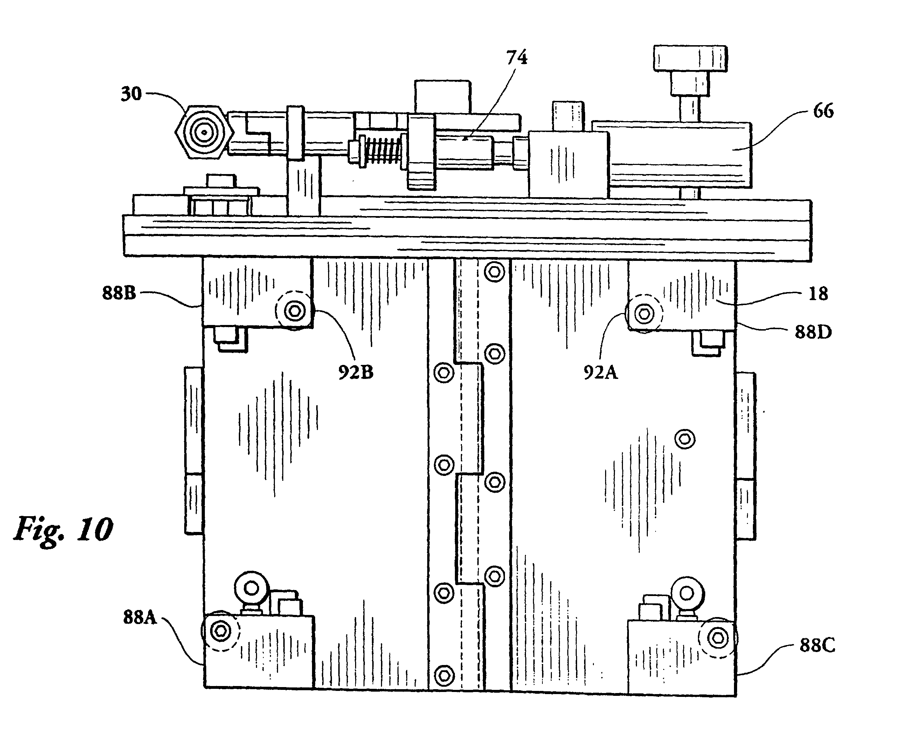

Attention will next be directed to the travel motor **18** and travel and drive rollers 20 as they relate to staying on and moving along track **14**. Travel and drive rollers may be conventional and are shown here to complete the overall new combination. Attention is next directed to FIGS. 6, 7, and 10. FIG. 10 is a bottom view of the welding bug **16.** Shown thereon are blocks for housings **88A, 88B, 88C,** and **88D** for the rollers. Shown within the blocks **88A** and **88C** are the side rollers and in blocks **88B** and **88D** are shown knurled wheels **92A** and **92B** which are driven by drive motor **18.** The side rollers keep the welding bug snug on the track. The knurled roller causes the welding bug to move along the track. FIGS. 6 and 7 show the clamping lever for clamping the rollers in position. FIG. 7 shows a clamping mechanism disengaged so that the rollers can be properly positioned. The rollers should be snug against the track band. Thus there is provided a spring and adjusting nuts **104**.

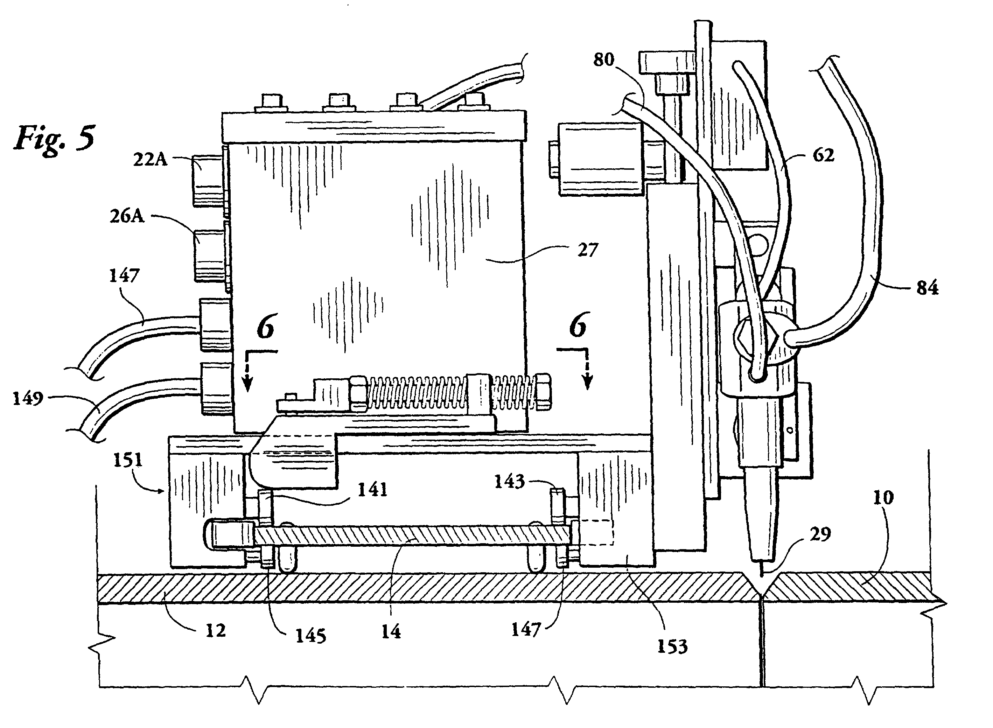

As shown in FIG. 5, support bearings **141** and **143** on top of track **14** and bearings **145** and **147** on the bottom of track **14** keep the welding bug **16** in contact with track **14**.

Also shown in FIG. 10 are: Bottom view of the welding head 30, oscillator drive motor **66,** and oscillator adjustment **74**.

The wire guide mechanism has been modified from that of the previous wire drive systems on conventional welding bugs. Conventional welding bugs require the bug to be stopped before a change of speed of the wire feed motor or drive motor for the bug was made. In this invention, a modification has been made such that the drive speed of the wire can be changed without stopping the movement of the welding bug. The drive mechanism for driving the welding bug about tracks **14** has been modified from that of the conventional welding bugs mostly in that the speed of the travel motor can be varied without stopping the welding process.

Control means for controlling the speed of the bug travel motor and the speed of the wire drive motor will now be discussed in relation to FIGS. 12 and 13.

Attention is next directed to FIG. 12 which shows one control means in schematic form for use in controlling the speed of travel motor **18**. (The illustrated system may also be used to control the speed of wire feed motor **24**.) It includes a pulse width oscillator **120** which has a power input **122.** The pulse width oscillator **120** has a reference voltage **124** which typically is 2 1/2 volts. The power circuit **132** connects to motor **18**. The speed of motor **18** varies as a function of the voltage of the current on line **132**. The outlet of the motor is provided through line **134** and variable resistor **128** back to oscillator **120**. There is a feedback line **130** from lines **134** to the oscillator **120**. This has a resistance **126** and provides a minute feedback to oscillator **120**. Resistor **128** can be varied to change the speed of motor **18** (as by moving knob on potentiometer **22**). As the resistance of resistor **128** is varied, the output voltage varies on line **132**. This voltage on line **130** is then compared to the oscillator reference voltage **124**. The width of the pulses **140, 142** shown in FIG. 13 changes until the minute feedback on line 130 equals the reference voltage. This will then control the speed of motor 18. One skilled in the art could easily implement this speed control system from the above schematic drawing and explanation. Other means of providing this motor control speed may be used.

FIGS. 4 and 5 illustrate potentiometer welding bug travel speed control knob **26A** and wire drive speed control knob **26A** mounted on control box **27**. These knobs can be used in cooperation with the control of FIG. 2 to adjust either or both of the speed of the bug travel motor or the wire feed motor. Control conduits **147** and **149** connect the control box **27** respectively to travel motor **18** and wire feed motor **24**.

Having described the principal components of the invention, attention will now be directed briefly at the operation thereof. In operation, the ends of pipe sections **10** and **12** will be placed adjacent each other, as shown in FIG. 1. A track **14** is connected about the pipe section **12**. The STT power source **31** is connected to pipeline tractor generator **33** to provide the power for the welding operation. Track **14** is set so the welding tip **29** is positioned properly with respect to the gap between pipe sections **10** and **12.** Normal adjustments will be made to the height and oscillation of welding head **30**.

Carbon dioxide solenoid **80** is then energized to open up the CO₂ supply source so that the CO₂ can be transported to the welding head **30**. Now the travel motor **18** and wire feed motor **24** will be started essentially simultaneously after the wire tip 29 is in proper position.

The initial or root pass of the welding operation is made on the outside of the pipe in the position shown in FIG. 1. The use of the surface-tension-transfer (STT) power source **31** is most essential. The STT power source operates neither in the constant current (CC) or constant voltage (CV) mode. Rather, it is a high frequency (wide-band-width), current-controlled machine wherein the power to the arc is based on the instantaneous arc requirements, not on an "average DC voltage". It is a power source which has the capability of delivering and changing electrode current in the order of microseconds.

As the travel motor causes the welding belt **16** to progress around track **14**, the operator closely watches the welding puddle to keep the welding tip **29** just ahead of the puddle. As the welding bug **16** moves downwardly, the force of gravity causes the welding puddle to want to move faster. Therefore, the welding operator will merely turn a knob **22A** as shown in FIG. 4 to adjust the speed as required. The operator can also adjust the speed of the wire feed motor **24** by adjusting knob **26A** as shown in FIG. 4. This is done without stopping either the travel motor **18** or the wire feed motor **24.** There is another welding head (not shown) which is on the other side of the pipe from that viewed in FIG. 1. The second operator will operate that welding bug in the same manner as just described. One of the bugs will start slightly before the other, so that there will be no gap at the top where the welding beads begin; and one of the bugs will stop before the other so that the one bug can continue the welding bead until it is continuous at the bottom. This operation is all from the outside of the pipe. There is no protrusion into the pipe of drippings and the like because of this new system described herein. There is no need for the root pass to be made on the inside. This eliminates a very costly procedure. After the root pass has been made, then additional welding passes may be made using conventional welding techniques as desired.

While the invention has been described with a certain degree of particularity, it is manifest that many changes may be made in the details of construction without departing from the scope of the attached claims.

## Claims

1. Method of welding the end of a first pipe (10) to the end of a second pipe (12) by use of a welding bug (16) having a welding wire feeder and means for driving the bug along a track on the outside periphery of pipe, said method comprising:
a. continuously moving said bug along said track during said welding;
b. applying the initial welding pass to the adjacent ends of said first and second pipe from outside said first and second pipe without use of internal line-up clamps with back-up shoes and using a consumable welding wire as an electrode to form a puddle between the ends of the pipe; and
c. during said initial pass varying the speed of said welding bug without stopping it while it is continuously moving about said track on said pipe to maintain the end of the welding wire at a desired position ahead of the welding puddle,
whereas said initial welding pass is applied by using a surface-tension-transfer (STT) power source to form said puddle between the ends of said pipes.

2. Method as defined in claim 1, including the step of applying additional welding passes after said initial pass.

3. Method as defined in claim 1 or 2, **characterized in that**, said power source has the capability of delivering and changing electrode current through the welding wire in the order of microseconds.

4. Method as defined in any one of claims 1 to 3, including the step of observing the end of the welding wire in relation to said welding puddle.

5. Method as defined in any one of claims 1 to 4, including the step of varying the speed of said bug in response to an observation of the welding puddle as the welding bug is moving about the periphery of said pipes such that the welding wire is ahead of said puddle.

6. Method as defined in any one of claims 1 to 5, **characterized in that** the speed of wire discharged by a welding wire feeder is variable.

7. Method as defined in claim 6, **characterized in that** the speed of wire discharged by said welding wire feeder is a function of the speed of the welding wire bug along said track.

8. Method as defined in any one of claims 1 to 7, **characterized in that** the speed of the welding bug is remotely varied.

9. Method as defined in any one of claims 1 to 8, **characterized in that** said welding head is oscillated between said first and second pipe ends.

10. Method as defined in claim 9, **characterized in that** the width of said oscillation is adjustable.

11. Method as defined in any one of claims 1 to 10, **characterized in that** the height of said welding head from said first and second pipe ends is adjustable.

12. Method as defined in any one of claims 1 to 11, including the step of applying an inert gas to said welding head during the formation of said welding puddle.

13. Method as defined in any one of claims 1 to 12, **characterized in that** the angle of said welding head relative to said first and second pipe ends is adjustable.

14. Method as defined in any one of claims 1 to 13, including the step of using two welding bugs to weld together said first and second pipe ends.

15. Apparatus for welding one end of a first pipe to one end of a second pipe, said apparatus comprising:
a. a welding tractor;
b. a power generator on and powered by said tractor (33);
c. a surface-tension-transfer (STT) power source (31) connected to said power generator
d. a welding bug (16) including a wire feeder (24) and a welding head (30) for feeding an advancing welding wire (28) as an electrode and means (14,18,20) to guide said bug around the periphery of said pipe;
e. speed control means (22) for varying the speed of said welding bug as it moves about its track around the periphery of said first and/or second pipe during the formation of an initial welding pass, said control means controlling the speed of said welding bug in a way to maintain the end of the welding wire ahead of the welding puddle.

16. Apparatus as defined in claim 15, wherein said surface-tension-transfer power source controlling the current through said consumable welding wire fed through said welding head.

17. Apparatus as defined in claim 15 or 16, **characterized in that** said speed control means being operated manually, and the speed of said welding bug being remotely varied.

18. Apparatus as defined in any one of claims 15 to 17, including wire feed control means (26) for varying the speed at which said welding wire is fed by said wire feeder.

19. Apparatus as defined in any one of claims 15 to 18, **characterized in that** the speed of wire discharged by said wire feeder is a function of the speed of the welding bug around said track.

20. Apparatus as defined in any one of claims 15 to 19, including means to oscillate said welding head between said ends of said first and second pipe.

21. Apparatus as defined in claim 20, including means for adjusting the width of said oscillation.

22. Apparatus as defined in any one of claims 15 to 21, including a mechanism to adjust the height of said welding head above said first and second pipe.

23. Apparatus as defined in any one of claims 15 to 22, including inert gas means for applying inert gas to said welding head during the formation of said weld.

24. Apparatus as defined in any one of claims 15 to 23, including a mechanism to adjust the angle of said welding head relative to the ends of said first and second pipe.

25. Apparatus as defined in any one of claims 15 to 24, including two welding bugs.

## Patentansprüche

1. Verfahren zum Verschweißen des Endes eines ersten Rohrs (10) mit dem Ende eines zweiten Rohrs (12) unter Verwendung eines Schweißwagens (16) mit einer Schweißdrahtzufuhreinrichtung und Mitteln zum Bewegen des Wagens entlang einer Bahn am Außenumfang der Rohre, wobei folgende Verfahrenschritte vorgesehen sind:
a. kontinuierliches Bewegen des Wagens entlang der Bahn während des Schweißens;
b. Schweißen der ersten Schweißlage an die aneinander angrenzenden Enden des ersten und des zweiten Rohrs von außerhalb des ersten und zweiten Rohrs ohne Verwendung von inneren Schalungsklammern mit Stützschuhen und Verwenden eines sich verbrauchenden Schweißdrahtes als Elektrode zum Bilden eines Schweißbads zwischen den Endes des Rohrs; und
c. Verändern der Geschwindigkeit des Schweißwagens während des ersten Schweißdurchgangs, ohne den Wagen anzuhalten, während er sich kontinuierlich entlang der Bahn an dem Rohr bewegt, um das Ende des Schweißdrahtes in einer gewünschten Lage vor dem Schweißbad zu halten,
wobei die genannte erste Schweißlage unter Verwendung einer Oberflächensannungs-Übertragungs- (STT) Stromversorgung aufgebracht wird, um das Schweißbad zwischen den Enden der Rohre zu bilden.

2. Verfahren nach Anspruch 1, einschließend den Verfahrensschritt, nach dem zusätzliche Schweißlagen nach der ersten Lage gelegt werden.

3. Verfahren nach Anspruch 1 oder 2, **dadurch gekennzeichnet, daß** die Stromversorgung die Fähigkeit hat, den Elektrodenstrom durch den Schweißdraht in einer Größenordnung von Mikrosekunden zu liefern und zu verändern.

4. Verfahren nach einem der Ansprüche 1 bis 3, einschließend den Verfahrensschritt, nach dem das Ende des Schweißdrahtes im Verhältnis zu dem Schweißbad beobachtet wird.

5. Verfahren nach einem der Ansprüche 1 bis 4, einschließend den Verfahrensschritt, wonach die Geschwindigkeit des Wagens in Reaktion auf die Beobachtung des Schweißbades so verändert wird, während sich der Schweißwagen um den Umfang des Rohrs bewegt, daß sich der Schweißdraht vor dem Schweißbad befindet.

6. Verfahren nach einem der Ansprüche 1 bis 5, **dadurch gekennzeichnet, daß** die Geschwindigkeit des aus der Drahtvorschubeinrichtung ausgestoßenen Drahtes veränderlich ist.

7. Verfahren nach Anspruch 6, **dadurch gekennzeichnet, daß** die Geschwindigkeit des aus der Drahtvorschubeinrichtung ausgestoßenen Drahtes eine Funktion der Geschwindigkeit des Schweißwagens entlang der Bahn ist.

8. Verfahren nach einem der Ansprüche 1 bis 7, **dadurch gekennzeichnet, daß** die Geschwindigkeit des Schweißwagens von fern verändert wird.

9. Verfahren nach einem der Ansprüche 1 bis 8, **dadurch gekennzeichnet, daß** der Schweißkopf zwischen den Enden des ersten und zweiten Rohres oszilliert wird.

10. Verfahren nach Anspruch 9, **dadurch gekennzeichnet, daß** die Breite der Oszillation einstellbar ist.

11. Verfahren nach einem der Ansprüche 1 bis 10, **dadurch gekennzeichnet, daß** der Abstand des Schweißkopfes von den Enden des ersten und zweiten Rohres einstellbar ist.

12. Verfahren nach einem der Ansprüche 1 bis 11, einschließend den Verfahrensschritt, wonach ein Inertgas dem Schweißkopf während der Bildung des Schweißbades zugeführt wird.

13. Verfahren nach einem der Ansprüche 1 bis 12, **dadurch gekennzeichnet, daß** der Winkel des Schweißkopfes relativ zu den Enden des ersten und zweiten Rohres einstellbar ist.

14. Verfahren nach einem der Ansprüche 1 bis 13, einschließend den Verfahrensschritt, wonach zwei Schweißköpfe verwendet werden, um die Enden des ersten und zweiten Rohres zusammenzuschweißen.

15. Vorrichtung zum Verschweißen eines Endes eines ersten Rohres mit einem Ende eines zweiten Rohres, wobei die Vorrichtung aufweist:
a. einen Schweißtraktor
b. einen am Traktor (33) angeordneten und von diesem angetriebenen Stromerzeuger;
c. einen Oberflächenspannungs-Übertragungs- (STT) Stromquelle (31), die an den Stromerzeuger angeschlossen ist;
d. einen Schweißwagen (16) mit einer Drahtzufuhreinrichtung (24) und einem Schweißkopf (30 zum Zuführen eines sich vorschiebenden Schweißdrahtes (28) als Elektrode und Mitteln (14,18,20) zum Führen des Wagens um den Umfang des Rohres;
e. Geschwindigkeitssteuer- bzw. regelmitteln (22) zum Verändern der Geschwindigkeit des Schweißwagens, während sich dieser entlang seiner Bahn um den Umfang des ersten und/oder zweiten Rohres während der Bildung einer ersten Schweißlage bewegt, wobei die Steuer- bzw. regelmittel die Geschwindigkeit des Schweißwagens so steuern bzw. regeln, daß das Ende des Schweißdrahtes vor dem Schweißbad gehalten wird.

16. Vorrichtung nach Anspruch 15, worin die Oberflächenspannungs-Übertragungs-Stromquelle den Strom durch den sich verzehrenden Schweißdraht steuert bzw. regelt, der durch den Schweißkopf zugeführt wird.

17. Vorrichtung nach Anspruch 15 oder 16, **dadurch gekennzeichnet, daß** die Geschwindigkeitssteuer- bzw. regelmittel von Hand betrieben werden, und daß die Geschwindigkeit des Schweißwagens von fern verändert wird.

18. Vorrichtung nach einem der Ansprüche 15 bis 17, mit Drahtzufuhrkontrollmitteln (26) zum Verändern der Geschwindigkeit, mit der der Schweißdraht von der Drahtzufuhreinrichtung zugeführt wird.

19. Vorrichtung nach einem der Ansprüche 15 bis 18, **dadurch gekennzeichnet, daß** die Geschwindigkeit des von der Drahtzufuhreinrichtung ausgestoßenen Drahtes eine Funktion der Geschwindigkeit des Schweißwagens um die Bahn ist.

20. Vorrichtung nach einem der Ansprüche 15 bis 19, mit Mitteln zum Oszillieren des Schweißkopfes zwischen den Enden des ersten und zweiten Rohres.

21. Vorrichtung nach Anspruch 20, mit Mitteln zum Einstellen der Breite der Oszillation.

22. Vorrichtung nach einem der Ansprüche 15 bis 21, mit einem Mechanismus zum Einstellen der Höhe des Schweißkopfes über dem ersten und zweiten Rohr.

23. Vorrichtung nach einem der Ansprüche 15 bis 22, mit Inertgasmitteln zum Zuführen von Inertgas zum Schweißkopf während der Herstellung der Schweißnaht.

24. Vorrichtung nach einem der Ansprüche 15 bis 23, mit einer Einrichtung zum Einstellen des Winkels des Schweißkopfes relativ zu den Enden des ersten und zweiten Rohres.

25. Vorrichtung nach einem der Ansprüche 15 bis 24, mit zwei Schweißwagen.

## Revendications

1. Procédé de soudage de l'extrémité d'un premier tuyau (10) sur l'extrémité d'un second tuyau (12) par l'utilisation d'un module de soudage (16), ayant un dispositif d'alimentation de fil de soudage et des moyens pour entraîner le module le long d'un anneau de guidage situé sur la périphérie extérieure du tuyau, ledit procédé comportant les étapes consistant à :
a. déplacer en continu ledit module le long de ledit anneau de guidage pendant ledit soudage,
b. appliquer la passe de soudage initiale sur les extrémités adjacentes desdits premier et second tuyaux à partir de l'extérieur desdits premier et second tuyaux sans l'utilisation d'attaches d'alignement intérieures munies de patins de renfort, et utiliser un fil de soudage consommable en tant qu'électrode pour former un bain de fusion entre les extrémités du tuyaux, et
c. pendant ladite passe initiale, modifier la vitesse dudit module de soudage sans l'arrêter tandis qu'il se déplace en continu autour dudit anneau sur ledit tuyau, pour maintenir l'extrémité du fil de soudage au niveau d'une position souhaitée en avant du bain de fusion de soudage,
de sorte que ladite passe de soudage initiale est appliquée en utilisant une source de courant de transfert de tension de surface (STT) pour former ledit bain entre les extrémités desdits tuyaux.

2. Procédé selon la revendication 1, incluant l'étape consistant à appliquer des passes de soudage supplémentaires après ladite passe initiale.

3. Procédé selon la revendication 1 ou 2, **caractérisé en ce que** ladite source de courant a la capacité d'acheminer et de modifier du courant d'électrode à travers le fil de soudage en un temps de l'ordre de microsecondes.

4. Procédé selon l'une quelconque des revendications 1 à 3, incluant l'étape consistant à observer l'extrémité du fil de soudage par rapport audit bain de fusion de soudage.

5. Procédé selon l'une quelconque des revendications 1 à 4, comportant l'étape consistant à modifier la vitesse dudit module en réponse à une observation du bain de fusion de soudage lorsque le module de soudage se déplace autour de la périphérie desdits tuyaux, de telle sorte que le fil de soudage est en avant dudit bain de fusion .

6. Procédé selon l'une quelconque des revendications 1 à 5, **caractérisé en ce que** la vitesse du fil évacué par un dispositif d'alimentation de fil de soudage est variable.

7. Procédé selon la revendication 6, **caractérisé en ce que** la vitesse du fil évacué par ledit dispositif d'alimentation de fil de soudage est fonction de la vitesse du module de fil de soudage le long dudit anneau.

8. Procédé selon l'une quelconque des revendications 1 à 7, **caractérisé en ce que** la vitesse du module de soudage est modifiée à distance.

9. Procédé selon l'une quelconque des revendications des revendications 1 à 8, **caractérisé en ce que** ladite tête de soudage est mise en oscillation entre lesdites première et seconde extrémités de tuyau.

10. Procédé selon la revendication 9, **caractérisé en ce que** la largeur de ladite oscillation est ajustable.

11. Procédé selon l'une quelconque des revendications 1 à 10, **caractérisé en ce que** la hauteur de ladite tête de soudage à partir desdites première et seconde extrémités de tuyau est ajustable.

12. Procédé selon l'une quelconque des revendications 1 à 11, incluant l'étape consistant à appliquer un gaz inerte à ladite tête de soudage pendant la formation dudit bain de fusion de soudage.

13. Procédé selon l'une quelconque des revendications 1 à 12, **caractérisé en ce que** l'angle de ladite tête de soudage par rapport auxdites première et seconde extrémités de tuyau est ajustable.

14. Procédé selon l'une quelconque des revendications 1 à 13, incluant l'étape consistant à utiliser deux modules de soudage pour souder ensemble lesdites première et seconde extrémités de tuyau.

15. Dispositif pour souder une première extrémité d'un tuyau sur une première extrémité d'un second tuyau, ledit dispositif comportant :
a. un tracteur de soudage,
b. un générateur de courant situé sur ledit tracteur (33) et alimenté par celui-ci,
c. une source de courant de transfert de tension de surface (STT) (31) connectée audit générateur de courant,
d. un module de soudage (16) incluant un dispositif d'alimentation de fil (24) et une tête de soudage (30) pour alimenter et faire avancer un fil de soudage (28) servant d'électrode, et des moyens (14, 18, 20) pour guider ledit module autour de la périphérie dudit tuyau, et
e. des moyens de commande de vitesse (22) pour modifier la vitesse dudit module de soudage lorsqu'il se déplace sur son anneau de guidage autour de la périphérie dudit premier et/ou second tuyau pendant la formation d'une passe de soudage initiale, lesdits moyens de commande commandant la vitesse dudit module de soudage de manière à maintenir l'extrémité du fil de soudage en avant du bain de fusion de soudage.

16. Dispositif selon la revendication 15, dans lequel ladite source de courant de transfert de tension de surface commande le courant à travers ledit fil de soudage consommable alimenté à travers ladite tête de soudage.

17. Dispositif selon la revendication 15 ou 16, **caractérisé en ce que** lesdits moyens de commande de vitesse sont actionnés manuellement, et la vitesse dudit module de soudage est modifiée à distance.

18. Dispositif selon l'une quelconque des revendications 15 à 17, incluant des moyens de commande d'alimentation de fil (26) pour modifier la vitesse à laquelle ledit fil de soudage est alimenté par ledit dispositif d'alimentation de fil.

19. Dispositif selon l'une quelconque des revendications 15 à 18, **caractérisé en ce que** la vitesse du fil évacué par ledit dispositif d'alimentation de fil est fonction de la vitesse du module de soudage autour dudit anneau de guidage.

20. Dispositif selon l'une quelconque des revendications 15 à 19, comportant des moyens pour faire osciller ladite tête de soudage entre lesdites extrémités desdits premier et second tuyaux.

21. Dispositif selon la revendication 20, comportant des moyens pour ajuster la largeur de ladite oscillation.

22. Dispositif selon l'une quelconque des revendications 15 à 21, incluant un mécanisme pour ajuster la hauteur de ladite tête de soudage au-dessus desdits premier et second tuyaux.

23. Dispositif selon l'une quelconque des revendications 15 à 22, incluant des moyens de gaz inerte pour appliquer du gaz inerte à ladite tête de soudage pendant la formation de ladite soudure.

24. Dispositif selon l'une quelconque des revendications 15 à 23, incluant un mécanisme pour ajuster l'angle de ladite tête de soudage par rapport aux extrémités desdits premier et second tuyaux.

25. Dispositif selon l'une quelconque des revendications 15 à 24, incluant deux modules de soudage.
